(19) Europäisches Patentamt
European Patent Office
Office européen des brevets

(11) **EP 4 589 882 A1**

(12) **EUROPEAN PATENT APPLICATION**

(43) Date of publication:
**23.07.2025 Bulletin 2025/30**

(21) Application number: **24153190.4**

(22) Date of filing: **22.01.2024**

(51) International Patent Classification (IPC):
*H04L 9/32* (2006.01)     *H04L 9/08* (2006.01)

(52) Cooperative Patent Classification (CPC):
**H04L 9/0875; H04L 9/3215; H04L 63/18;**
H04L 2209/80

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Vestel Elektronik Sanayi ve Ticaret A.S.**
**45030 Manisa (TR)**

(72) Inventors:
• **AYGÜL, Mehmet Ali**
**45030 Manisa (TR)**
• **ARSLAN, Hüseyin**
**34810 Istanbul (TR)**

(74) Representative: **Grünecker Patent- und Rechtsanwälte**
**PartG mbB**
**Leopoldstraße 4**
**80802 München (DE)**

(54) **CHANNEL-BASED SECRET KEY SHARING ALGORITHM**

(57)     Techniques and methods are described to generate a shared secret key using channel characteristics between a transmitting device and a receiving device. A public key is transmitted to a communication device over a first wireless channel and a second wireless channel that is different from the first wireless channel. From the communication device, a first signal and a second signal both carrying the public key are received over the first wireless channel and the second wireless channel, respectively. Based on the first signal and the public key, a first channel response is calculated and, based on the second signal and the public key, a second channel response is calculated. The secret key is determined based on the first and second channel response. In this way, the generation of a channel-based shared secret key becomes more secure and robust against eavesdropping of illegitimate users, allowing for secure communication.

810: transmitting, to a communication device, a public key over a first wireless channel and over a different second wireless channel

820: receiving, from the communication device, a first signal carrying the public key over the first wireless channel and a second signal carrying the public key over the second wireless channel

830: estimating a first channel response based on the public key and the first signal

840: estimating a second channel response based on the public key and the second signal

850: determining the secret key based on the first channel response and the second channel response

**FIG. 8**

EP 4 589 882 A1

**Description**

The present disclosure relates generally to wireless communication, and in particular to secret key sharing based on a channel between communication devices.

**BACKGROUND**

The fifth generation (5G) and beyond communication systems face diverse demands for applications such as low latency, improved reliability, high data rates, and flexibility. However, the security of the transmitted data between legitimate nodes is still a major concern that needs to be addressed; this is due to the open and broadcast nature of wireless communication that makes it susceptible to various attacks, the latter aims to target different security services such as data confidentiality, message integrity, and node authentication. Thus, communication must be extremely secure and protected against those malicious threats.

Ideally, the above demands should be simultaneously met by a wireless network, which is not possible in practice. However, the demand on security and power consumption are ones of the major critical concerns in many wireless networks as part of the fast progress in various applications over these networks. While several security algorithms have been implemented in different network layers, hardware complexity issues still exist. These are related to the battery consumption of remotely connected devices as well as the power consumption of fixed nodes, which prompt environmental consideration through the network design and operation to minimize energy consumption. Currently, cryptography-based algorithms are not yet used in wireless communications standards. However, there is a strong belief in the literature that physical (PHY) layer-based solutions will be considered in the future for the standards. The main idea in physical layer security is using channel characteristics for the purpose of security measures such as authentication and encryption or the like. Wireless communication systems have been vulnerable to eavesdropping attacks due to their broadcast feature. Generally, cryptography-based solutions are used to secure communication systems. However, these solutions are complex and require high power consumption. Alternatively or additionally, physical layer security solutions can be employed in future wireless communication systems. Along this line, the channel-based secret key-sharing algorithm has taken great interest, exploiting channel uniqueness between nodes (users, terminals, access infrastructure, etc.).

Some recent works investigate security issues from the point of view of power efficiency without compromising performance or adding new vulnerable threats. It was found that a symmetric cipher and secret keys effectively secure confidential data exchange from being intercepted. The process of exchanging private keys (for symmetric ciphers) has been well established in cryptography, and many methods have been practically implemented, relying on mathematically proven secure algorithms. Nevertheless, those methods require longer key lengths and more sophisticated implementation to satisfy the standard requirements, which may not be appropriate for limited power devices. As an alternative, PHY layer-based algorithms for establishing security have been discussed in the last decade.

However, channel-based secret key-sharing algorithms may open new possibilities for an attacker to infiltrate the communication between two or more legitimate users. Closing security gaps in channel-based secret-key communication remains a challenge.

**SUMMARY**

Methods and techniques are described herein for facilitating channel-based secret key sharing between users. For that purpose, the present disclosure provides methods and techniques to generate a secret key exploiting the uniqueness of a wireless channel between users that share the generated secret key.

The invention is defined by the independent claims. Some exemplary implementations are provided by the dependent claims.

For example, an apparatus for secret key generation is provided , the apparatus comprising: a transmitter configured to transmit, to a communication device, a public key over a first wireless channel and over a second wireless channel different from the first wireless channel: a receiver configured to receive from the communication device: a first signal carrying the public key over the first wireless channel; and a second signal carrying the public key over the second wireless channel; and processing circuitry configured to: estimate a first channel response based on the public key and the first signal and a second channel response based on the public key and the second signal; determine the secret key based on the first channel response and the second channel response.

The above mentioned circuitry may be any circuitry such as processing circuitry including one or more processors and/or other circuitry elements.

Furthermore, method for secret key generation is provided comprising steps of: transmitting, to a communication device, a public key over a first wireless channel and over a second wireless channel different from the first wireless channel; receiving from the communication device: a first signal carrying the public key over the first wireless channel; and

a second signal carrying the public key over the second wireless channel; estimating a first channel response based on the public key and the first signal; estimating a second channel response based on the public key and the second signal; and determining the secret key based on the first channel response and the second channel response.

These and other features and characteristics of the presently disclosed subject matter, as well as the methods of operation and functions of the related elements of structures and the combination of parts and economies of manufacture, will become more apparent upon consideration of the following description and the appended claims with reference to the accompanying drawings, all of which form a part of this specification. It is to be expressly understood, however, that the drawings are for the purpose of illustration and description only and are not intended as a definition of the limits of the disclosed subject matter. As used in the specification and the claims, the singular form of "a", "an", and "the" include plural referents unless the context clearly dictates otherwise.

## BRIEF DESCRIPTION OF DRAWINGS

An understanding of the nature and advantages of various embodiments may be realized by reference to the following figures.

FIG. 1        is a block diagram illustrating an exemplary communication system CS.

FIG. 2a      is a block diagram illustrating an exemplary apparatus such as a transmittingreceiving device performing the channel-based secret key generation.

FIG. 2b      is a block diagram illustrating an exemplary apparatus such as a transmittingreceiving device performing the channel-based secret key generation.

FIG. 3        is an illustration of generating a channel-based secret key according to prior art, including a forward transmission by Alice (A) using a first channel and reverse transmission by Bob (B) using a second channel.

FIG. 4        is an illustration of generating a channel-based secret key according to prior art, where Bob and Alice transmit known bits X to each other in a forward period $T_F$. In a reverse period $T_R$, Bob and Alice transmit their signals received in $T_F$ back to each other. Alice uses the first channel and Bob uses the second channel in periods $T_F$ and $T_R$.

Fig. 5        is an illustration of generating a channel-based secret key according to prior art, where Bob and Alice generate their secret key as convolution of the first and second channel responses, estimated from their receives signals S1, S3 and S2 and S4, respectively.

FIG. 6A      is an illustration of step 1 in generating a channel-based secret key according to the present disclosure, where Alice and Bob transmit known bits to each other over the second and first channel, respectively, and both estimate the channel response from their respective reception signal S1 and S2.

FIG. 6B      is an illustration of step 2 in generating a channel-based secret key according to the present disclosure, where Alice and Bob again transmit known bits to each other now over the first and second channel, respectively, and both estimate the channel response from their respective reception signal S2 and S1.

FIG. 6C      is an illustration of step 3 in generating a channel-based secret key according to the present disclosure, where Alice and Bob generate their secret key based on the first and second channel responses estimated from their received signals S1 and S2.

FIG. 7        is a block diagram illustrating an exemplary apparatus to generate a channel-based secret key according to the present disclosure.

FIG. 8        is a flow diagram illustrating exemplary steps of the procedure to generate a channel-based secret key according to the present disclosure.

Like reference numbers and symbols in the various figures indicate like elements, in accordance with certain example implementations.

**EP 4 589 882 A1**

## DETAILED DESCRIPTION

For purposes of the description hereinafter, the terms "end," "upper," "lower," "right," "left," "vertical," "horizontal," "top," "bottom," "lateral," "longitudinal," and derivatives thereof shall relate to the disclosed subject matter as it is oriented in the drawing figures. However, it is to be understood that the disclosed subject matter may assume various alternative variations and step sequences, except where expressly specified to the contrary. It is also to be understood that the specific devices and processes illustrated in the attached drawings, and described in the following specification, are simply exemplary embodiments or aspects of the disclosed subject matter. Hence, specific dimensions and other physical characteristics related to the embodiments or aspects disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one". Furthermore, as used herein, the term "set" is intended to include one or more items (e.g., related items, unrelated items, a combination of related and unrelated items, and/or the like) and may be used interchangeably with "one or more" or "at least one". Where only one item is intended, the term "one" or similar language is used. Also, as used herein, the terms "has", "have", "having", or the like are intended to be openended terms. Further, the phrase "based on" is intended to mean "based at least partially on" unless explicitly stated otherwise.

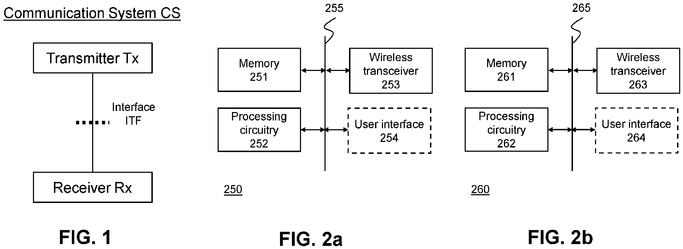

Fig. 1 illustrates an exemplary communication system CS in which Tx represents a transmitter and Rx represents a receiver. The transmitter Tx is capable of transmitting a signal to the receiver Rx over an interface ITF. The interface may be, for instance, a wireless interface. For example, the wireless interface may be implemented by a single antenna of transmitter Tx and/or receiver Rx. Alternatively, the wireless interface may be implemented by multiple antennas of the transmitter Tx and/or receiver Tx. The interface may be specified by means of resources, which can be used for the transmission and reception by the transmitter Tx and the receiver Rx. Such resources may be defined in one or more (or all) of the time domain, frequency domain, code domain, and space domain. It is noted that in general, the "transmitter" and "receiver" may be also both integrated in the same device. In other words, the devices Tx and Rx in Fig. 1 may respectively also include the functionality of the Rx and Tx.

The present disclosure is not limited to any particular transmitter Tx, receiver Rx and/or interface IF implementation. However, it may be applied readily to some existing communication systems as well as to the extensions of such systems, or to new communication systems. Exemplary existing communication systems may be, for instance the 5G New Radio (NR) in its current or future releases, and/or the IEEE 802.11 based systems such as the recently studied IEEE 802.11be, and 6G technologies or the like.

As mentioned in the background section, security and power consumption are one of critical concerns in many wireless networks as part of the fast progress in various applications over these networks. While several security algorithms have been implemented in different network layers, hardware complexity issues still exist. These complexities are related to the battery consumption of remotely connected devices as well as the power consumption of fixed nodes, which prompt environmental consideration through the network design and operation to minimize energy consumption. Recent work investigates security issues from the point of view of power efficiency without compromising performance or adding new vulnerable threats. It was found that the symmetric cipher and secret keys effectively secure a confidential data exchange from being intercepted. The process of exchanging private keys (for symmetric ciphers) has been well established in cryptography, and many methods have been practically implemented, relying on mathematically proven secure algorithms. Nevertheless, those methods require longer key lengths and more sophisticated implementation to satisfy the standard requirements, which may not be appropriate for limited power devices. As an alternative, physical (PHY) layer-based algorithms for establishing security have been proposed in the last decade.

In PHY layer security, the wireless channel characteristics is used in general in establishing shared secret keys, based on the reciprocal feature of wireless link has attracted some interest in the literature. The characteristics of wireless channel is used as a common random resource for users to generate a secret key. If the distance between the eavesdropper and any user in the network is a few centimeters, the channels are not necessarily correlated with the other users' channels. Based on random and reciprocity features of a fading channel, various secret key agreement approaches were suggested for wireless communication systems in time division duplex (TDD) mode. However, in the frequency division duplex (FDD) situation, the simultaneous use of two different channels for transmitting and receiving results in losing the advantage of the channel reciprocity exploited in the key generation as in TDD case. Therefore, the characteristics of channel status information (CSI) used to create a shared key may not be directly used in FDD mode. Lately, several approaches have been established for FDD systems. In the case of FDD systems, the communication can be performed in FDD, but the key sharing can be performed in TDD. However, transitioning from FDD to TDD in a communication system is not always a straightforward process, as it may involve significant changes to the network architecture and infrastructure. The choice between FDD and TDD is typically made during the initial design and deployment of a wireless communication system, and the decision is based on specific requirements and considerations.

4

Here are some factors to consider when contemplating a transition from FDD to TDD:

Network Architecture: FDD systems have separate frequency bands for uplink (UL) and downlink (DL), while TDD systems use the same frequency band, but allocate different time slots. Transitioning between these architectures may require substantial modifications to an existing infrastructure in case of some communication systems.

Spectrum Allocation: FDD systems are allocated to specific frequency bands for UL and DL, and changing this allocation to accommodate TDD may require regulatory approval and coordination.

RF Component Compatibility: RF components in FDD systems may be designed to operate in a specific frequency range for UL and DL. Transitioning to TDD may require the replacement or modification of RF components to support the new time-based duplexing scheme.

Device Compatibility: User devices, such as smartphones and other wireless devices, may be designed to work with a specific duplexing scheme. Transitioning from FDD to TDD may then necessitate device upgrades or replacements to ensure compatibility with the new system.

Backward Compatibility: If a transition is planned, ensuring backward compatibility with existing FDD devices during the transition period is crucial. This involves supporting both FDD and TDD modes for a certain duration.

Regulatory Approvals: Regulatory bodies often play a role in spectrum allocation and standards compliance. Any transition between FDD and TDD may need approval and coordination with relevant regulatory authorities.

Network Planning and Optimization: The transition requires careful network planning and optimization to account for changes in coverage, capacity, and interference patterns associated with the switch in duplexing schemes.

Approaches have been proposed to create a shared key between two nodes by applying the Chinese remainder theorem on the angle of the path used for receiving signal. However, these methods are complex, and so that is difficult to realize them in practice. A pilot-based channel estimation approach in a feedback system has been suggested to estimate a virtual channel gain, while other work proposed channel-based key sharing algorithm. In essence, in these algorithms, the publicly known bits are generated by both Alice and Bob. Alice sends the known bits to Bob and Bob obtains his channel response $h_1$ effected bits, while Bob sends the known bits to Alice and Alice obtains her channel response $h_2$ effected bits. Then, Alice sends $h_2$ effected bits to Bob, and Bob sends $h_1$ effected bits to Alice. Alice and Bob estimates $h_1$ convolved $h_2$ (i.e. the convolution of $h_1$ and $h_2$), which constitutes their secret key. Still, these algorithms vulnerable to an attack, which may be summarized as follows: When Alice sends S1 to Bob, an illegitimate user can gain knowledge of $h_1$ because S1 carries $h_1$. Likewise, when Bob sends S2 to Alice, since the S2 has $h_2$ knowledge, the illegitimate user can gain knowledge of $h_2$ because S2 carries $h_2$. Thus, if the illegitimate user knows the channel responses $h_1$ and $h_2$, the illegitimate user can also estimate the secret key. As a result, a security gap is created.

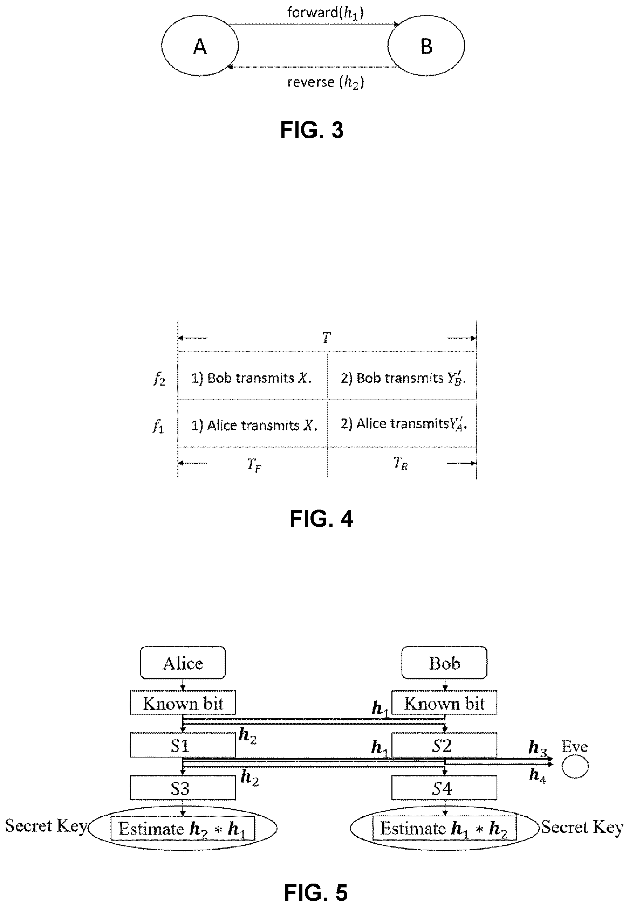

The emergence of said security gap is illustrated for the case of generating a shared secret key depending on the PHY layer features of the wireless network in FDD mode. The following algorithm exemplifies the key generation scheme for point-to-point FDD communication mode known in the literature. The system model for the suggested protocol is shown in Figs. 3 and 4, and the resource element of the scheme is shown in Fig. 5. Fig. 3 shows two users A and B referring to Alice (A) and Bob (B) that communicate over a wireless channel. In the example, the wireless channel is split into a forward channel $h_1$ and a reverse channel $h_2$. The labels "1" and "2" merely indicate that the forward channel operates in a first frequency band (i.e. a band including a plurality of carrier frequencies) and the reverse channel operates in a second frequency band (i.e. a band including a plurality of carrier frequencies that may be different from the band of $h_1$). The terms "forward" and "reverse" relate to the order of transmitting a first signal and sending back a reception signal of the first signal. This will be further detailed in the following. When Alice and Bob communicate, Alice may send first a signal to Bob, who receives it and sends its received signal back to Alice. This means that the initial first signal experiences a two-times fading (i.e. two fading periods for one fading cycle) when transmitted over the wireless channel. To understand the origin of the above-mentioned security gap, the cycle fading may be split into two parts: a forward training allocation $T_F$ and reverse training allocation $T_R$. For channels $h_1$ and $h_2$ after the forwarding channel estimation phase, where Bob and Alice transmit first a known signal X (e.g. a known bit sequence, pilot signal or the like) to each other, Bob and Alice simultaneously receive the signals:

$$Y_B' = h_1 X + N_B$$

$$Y_A' = h_2 X + N_A.$$

The wireless channels $h_1$ and $h_2$ are typically not ideal in that any signal transmitted over the wireless channel may be distorted by noise. Therefore, the signals $Y_B'$ and $Y_A'$ received by Alice and Bob are distorted by noise $N_B$ and $N_A$. The noise refers to (is modelled as) a random signal distortion of the wireless channel in the respective frequency band. The noise may be represented as a Gaussian noise with zero mean and unit variance. As may be discerned from the signals $Y_B'$ and $Y_A'$, both entail information on the channel response, i.e. the characteristics of the wireless channel at the respective frequency bands 1 and 2.

After that, Alice and Bob feedback their received signals $Y_A'$ and $Y_B'$, which refers to the reverse channel training phase. Hence, after the reverse channel training phase, Alice and Bob simultaneously receive the signals $Y_A$ and $Y_B$ that are given by:

$$Y_A = h_2 Y_B' + N_A = h_1 h_2 X + h_2 N_B + N_A$$

$$Y_B = h_1 Y_A' + N_B = h_1 h_2 X + h_1 N_A + N_B.$$

From the received signals $Y_A$ and $Y_B$, Alice and Bob get the following estimates for the composed forward-reverse channel response:

$$\tilde{h}_{12,A} = \frac{X^T}{\|X\|^2} Y_A = h_1 h_2 + h_2 \frac{X^T}{\|X\|^2} N_B + \frac{X^T}{\|X\|^2} N_A$$

$$\tilde{h}_{12,B} = \frac{X^T}{\|X\|^2} Y_B = h_1 h_2 + h_1 \frac{X^T}{\|X\|^2} N_A + \frac{X^T}{\|X\|^2} N_B$$

Then, using the correlated estimation pair $h_1 h_2$, Alice and Bob approve the sequence K as a shared key. The pair $h_1 h_2$ is correlated at the side of Alice and at the side of Bob because both Alice and Bob operating as legitimate nodes have the same estimated pair $h_1 h_2$ which they use to generate their secret key. To generate secret keys there are several methods in the literature. For example, a conventional amplitude-based subcarrier-wise key generation algorithm may be used where key bits are generated by comparing estimated channel coefficients' amplitudes with their mean. Hence, the generate key bits correspond to the sequence K. The algorithm is as follows and illustrated in Fig. 4.
Algorithm: Key Generation for Point-to-Point FDD mode:

Stage 1: Channel Estimation

1) Alice transmits an identified signal X with transmitted power P over channel $h_1$ using carrier frequency $f_1$ to Bob. Bob receives $Y_B'$. Simultaneously, Bob transmits a known signal X with transmitted power P over channel $h_2$ using carrier frequency $f_2$ to Alice. Alice receives $Y_A'$. This means that carrier frequencies $f_1$ and $f_2$ lies within their first and second frequency band, respectively.

2) Alice transmits received $Y_A'$ with transmitted power P over channel $h_1$ to Bob. Bob receives $Y_B$ from which Bob gets the estimate $\tilde{h}_{12,B}$. Simultaneously, Bob transmits received $Y_B'$ with power P over channel $h_2$ to Alice. Alice receives $Y_A$ from which Alice gets the estimate $\tilde{h}_{12,A}$.

Stage 2: Key Agreement
Alice and Bob approve the sequence K as a shared key, using the correlated estimation pair $(\tilde{h}_{12,A}; \tilde{h}_{12,B})$.

In this scheme of generating keys shared between legitimate users (e.g. Alice and Bob), an illegitimate user is able to estimate $h_1$ and $h_2$, and hence obtains illegal knowledge on the shared key.. This defines the security gap and may become transparent in Fig. 5. For example, when Alice sends reception signal S1 (i.e. $Y_B'$) back to Bob, the illegitimate user can determine $h_1$ by eavesdropping S1 since the received S1 has already knowledge on $h_1$. Similarly, when Bob sends reception signal S2 (i.e. $Y_A'$) back to Alice, since the S2 has already knowledge on $h_2$. Thus, with knowing $h_1$ and $h_2$, the illegitimate user can also estimate the secret key, which creates a security gap.

The present disclosure provides methods, apparatuses, and techniques that eliminate this security gap, while generating a channel-based shared secret key suitable for FDD. In other words, the secret key may be shared in FDD mode and hence avoids various factors to be considered when the mode of sharing the (secret) key was transitioned from FDD to TDD, with said factors related to network architecture, spectrum allocation, RF component compatibility, device compatibility, backward compatibility, regulatory approvals, and network planning and optimization. Details of these factors have been discussed above.

Fig. 2a illustrates a transmitting-receiving device 250 according to some exemplary embodiments, which communicates with a transmitting-receiving device 260 of Fig. 2b, which may generate a secret key being shared between the transmitting-receiving devices 250 and 260, respectively. The procedure of generating a channel-based shared secret key according to the present disclosure will be detailed later. The transmitting-receiving device 250 may be a part of any wireless communication device such as a station (STA) or access point (AP), or, in general base station (BS) or terminal (i.e. user equipment UE). The transmitting-receiving device 250 comprises memory 251, processing circuitry 252, and a wireless transceiver 253 (or a wireless transmitter 253), which may be capable of communicating with each other via a bus 255. The transmitting-receiving device 250 may further include a user interface 254. However, for some applications, the user interface 254 is not necessary (for instance some devices for machine-to-machine communications or the like). The transmitting-receiving device 250 may be the transmitter Tx or the receiver Rx of the communication system CS in Fig. 1, depending on whether the transmitting-receiving device performs a function of transmitting to or receiving from its communication partner, i.e. the transmitting-receiving device 260, a signal. The transmitting-receiving device may be referred to as communication apparatus or communication device. For instance, Alice and/or Bob may communicate using such transmitting-receiving (transceiver) device.

The memory 251 (also referred to as storage) may store a plurality of firmware or software modules, which implement some embodiments of the present disclosure. The memory may 251 be read from by the processing circuitry 252. Thereby, the processing circuitry may be configured to carry out the firmware/software implementing the embodiments. The processing circuitry 252 may include one or more processors, which, in operation, prepare data for transmission. In particular, the circuitry 252 is configured to map sequential portions of the data onto respective modulation symbols according to a target modulation. In an implementation example, the target modulation is one of phase shift keying, PSK, pulse amplitude modulation, PAM, and quadrature amplitude modulation, QAM, but may not be limited to the target modulations listed. For example, amplitude phase shift keying (ASK) or frequency shift keying (FSK) may be also used to map sequential portions of the data onto respective modulation symbols according to ASK or FSK. A further option is to combine target modulations. As such it is understood, that the above-listed target modulations also cover their respective subsets. PSK, for example, covers BPSK, DPSK, M'ary PSK, QPSK, OQPSK etc.. FSK covers BFSK, M'ary FSK, MSK, GMSK etc.. ASK covers on-off keying, M'ary ASK etc.. QAM is commonly referred to as M'ary QAM covering rectangular QAM or circular QAM. The modulation symbols include a first modulation symbol and a second modulation symbol. In a particular exemplary implementation, BPSK or QPSK are used to generate the modulation symbols. Such lower-order modulations are robust and their application for pairing modulation may provide further improvement as discussed herein.

The wireless transceiver 253 is configured to transmit a signal to the transmitting-receiving device Rx shown in Fig. 2b which operations are further detailed below. Before passing the signal to an analog front including a single or multiple antennas, the transceiver may perform possibly further operations. Such further operations may include an inverse transformation such as the inverse fast Fourier transform (IFFT) or inverse discrete cosine transform (IDCT), in accordance with the desired (orthogonal or non-orthogonal) frequency division multiplex. Moreover, the transformed time-domain symbols may then be modulated onto the actual carrier, amplified or the like.

In an exemplary implementation, the transmitting operation of the transceiver 253 includes further orthogonal frequency division multiplex, OFDM, modulation of the carriers including carriers carrying the symbols of the signal. Alternatively, non-OFDM waveforms may be used for modulating the carriers that carry the respective symbols, which are transmitted using a single antenna. Alternatively, the symbols may be transmitted using multiple antennas.

As Fig. 2a shows, the memory 251 may be separated from the processing circuitry 252. However, this is only an example. In general, the memory 251 may be implemented within the processing circuitry 252, and e.g., within the one or more processors. The term "memory" refers to any type of long term, short term, volatile, nonvolatile, or other memory and is not to be limited to any particular type of memory or number of memories, or type of media upon which memory is stored.

The wireless transceiver 253 may operate according some known resource multiplexing and/or multi-user multiplexing scheme. In general, any currently used scheme such as those employed in the IEEE 802.11 framework or in the 5G/6G framework are applicable. In particular, possible examples include the OFDM, OFDMA, or non-orthogonal multiple access (NOMA) or the like.

In the following, terms "Alice" and "Bob" are used to represent users or communication devices, such as the transmitting-receiving device 250 and 260 in Figs. 2a and 2b that wireless communication to generate a shared channel-based secret key that avoids the above-mentioned security gap.

In an exemplary embodiment, the apparatus that generates a secret key generation transmits a public key to a communication device over a first wireless channel and over a second wireless channel. The first and second wireless channels are different. The apparatus may be the transmitting-receiving device 250 shown in Fig. 2a, and is referred to the user Alice (A) representing a legitimate user. In turn, the communication device may be the transmitting-receiving device 260 shown in Fig. 2b, and is referred to the user Bob (B) representing also a legitimate user. It is noted that the communication device (Bob) may be the apparatus for generating also a secret key, because Alice and Bob communicating with each other in the same manner regarding the processing they perform so as to generate a secret key, respectively using the characteristics of the wireless channel between them. This will be explained in the following, where the generation of a shared secret key may be performed as follows:

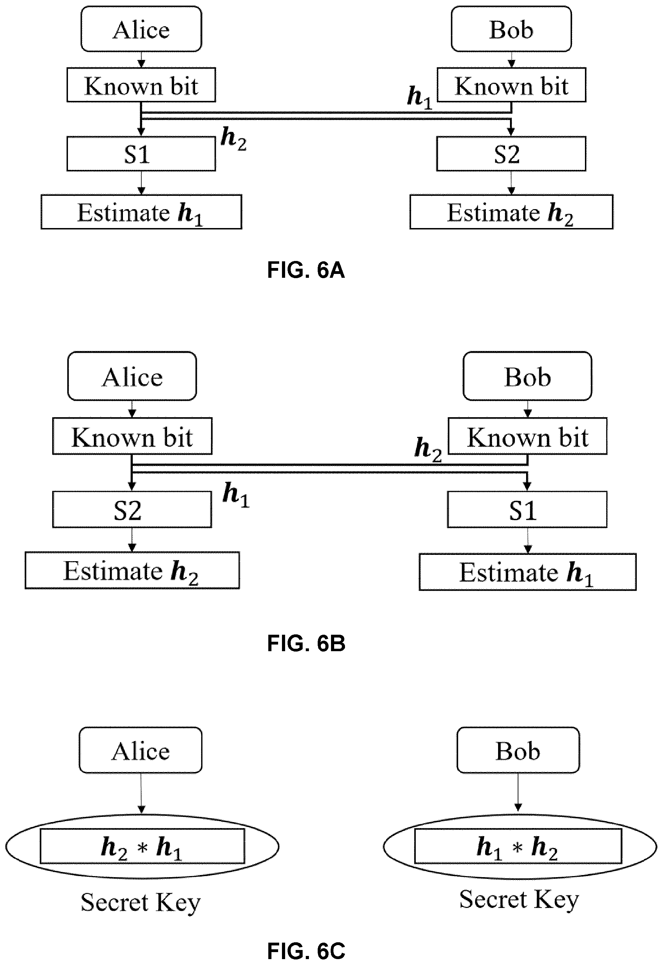

Step 1 as illustrated in Fig. 6A:

- Before Alice and Bob transmit the public key, the public key may be generated as a predefined bit sequence. This means that Alice and Bob generate the same bit sequence which is publicly known by other users. This is referred to as "known bit" in Fig. 6A. This bit sequence is called a public key. The public key may be a pilot signal or a reference signal known to the users, i.e. communication devices such as the transmitting-receiving device 260 in Fig. 2b. This means that also the illegitimate user may know the public key. The term public key in relation to known bit sequence means that the users know for said public key or reference signal (e.g. pilot) what the bit sequence is and/or generate same bit sequence for the known reference signal. The reference signal for which a bit sequence is generated may be predefined. The predefined bit sequence may be generated by the processing circuitry 252 of the transmitting receiving device 250 in Fig. 2a and/or the processing circuitry 262 of the transmitting-receiving device 260 in Fig. 2b.

- Alice sends / transmits the public key (known bits) to the communication device (Bob) over a second wireless channel $h_2$. For example, Alice may send the public key in a second frequency band (i.e. frequency band 2). The transmission of the public key may be performed by a transmitter, such as the wireless transceiver 253 of the transmitting-receiving device 250 in Fig. 2a. The wireless transceiver 253 may be configured to perform functions of transmitting and/or receiving. Bob receives / obtains the $h_2$ affected bit sequence in said second wireless channel. For example, the $h_2$ affected bit sequence may be received by the wireless transceiver 263 of the transmitting-receiving device 260 in Fig. 2b. The wireless transceiver 253 may be configured to perform functions of transmitting and/or receiving. In turn, Bob sends / transmits the public key (known bits) by use of the transceiver 263 to Alice over a first wireless channel $h_1$. For example, Bob may transmit the public key in a first frequency band (i.e. frequency band 1) that is different from the second frequency band. This means that the wireless channel over which the apparatus (i.e. transmitting-receiving device 250) and the communication device (i.e. transmitting-receiving device 260) transmit and receive the public key may be split in different frequency bands. The term different means that the first and second frequency bands are non-overlapping (i.e. orthogonal) or partially overlapping. Alice receives / obtains the $h_1$ affected bit sequence by use of the wireless transceiver 253. The received $h_1$ affected bit sequence refers to a first signal which carries the public key and being received over the first wireless channel. Said first signal may be received by a receiver of the apparatus, such as the wireless transceiver 253 of transmitting-receiving device 250 In Fig. 2a. Alice and Bob may send (i.e. transmit) the known bits (i.e. bit sequence of the public X) simultaneously over their wireless channels in their respective first and second frequency bands. Hence, in the first step, the public key is transmitted by the wireless transceiver 253 (transmitter) over the second wireless channel and the wireless transceiver 253 (receiver) receives the first signal S1 over the first wireless channel (Alice). In contrast, the communication device (Bob) transmits the public key by the wireless transceiver 263 (transmitter) over the first wireless channel and the wireless transceiver 263 (receiver) receives a second signal S2 over the second wireless channel (Alice), as depicted in Fig. 6A.

- Since the signal S1 received by Alice and the signal S2 received by Bob carry knowledge on the wireless channel over which the known bits have been transmitted, the channel response can be estimated by Alice and Bob, i.e. the characteristics of the wireless channel can be determined at the respective frequency band. The processing circuitry 252 may estimate a first channel response $\tilde{h}_1$ based on the public key and the first signal S1. In the example, Alice determines a channel estimate $h_1$ from received signal S1, whereas Bob determines a channel estimate $h_2$ from received signal S2, as illustrated in Fig. 6A. It is noted that lowercase symbols correspond to quantities in time-domain, while uppercase symbols correspond to frequency-domain. Here, the symbol $\boldsymbol{h}$ refers to the time-domain channel response, while $\boldsymbol{H}$ refers to the channel response in frequency-domain. Quantities in time-domain (e.g. the channel response) may be obtained via a Fourier transform of the corresponding quantity in the frequency-domain.

For example, the first channel response $\tilde{h}_1$ may be estimated in frequency domain as $\tilde{H}_1$ based on the relation:

$$\widetilde{H}_1 = \frac{Y_1 X^T}{||X||^2}$$

where $Y_1$ refers to the first signal (received signal carrying the key), $X$ refers to the public key (represented as the predefined bit sequence, thus undistorted), $|| \ ||^2$ being the square norm (Euclidian norm). The symbol $T$ in $X^T$ refers to taking the complex conjugate transpose of the bit sequence $X$. In other words, $\tilde{H}_1$ corresponds to the received signal divided by the public key $X$. In the above equation, the division by the public key is formally given in terms of the expression $X^T/||X||^2$. The tilde symbol ~ marks an estimate of the channel response $H_1$ (frequency domain) and $\tilde{h}_1$ (time domain).

Step 2 as illustrated in Fig. 6B:

- Alice and Bob repeat above Step 1 in that Alice transmits / sends the public key (known bits) to the communication device (Bob) and Bob transmits / sends the public key (known bits) to Alice. However, contrary to step 1, Alice uses frequency band 1, while Bob uses frequency band 2. In other words, Alice transmits / sends the known bits to Bob over the wireless channel $h_1$ (frequency band 1), and Bob receives / obtains the $h_1$ affected bit sequence. In turn, Bob transmits / sends the known bits to Alice over wireless channel $h_2$ (frequency band 2), and Alice receives / obtains the $h_2$ affected bit sequence. This means that the receiver (wireless transceiver 253) receives a second signal over the second wireless channel, with the second signal carrying the public key. Hence, in the second step that follows the above first step, the transceiver 253 (transmitter) transmits to the communication device the public key now over the first wireless channel and the transceiver 253 (receiver) receives the second signal S2 over the second wireless channel. In contrast, the communication device (Bob) transmits the public key by the wireless transceiver 263 (transmitter) over the second wireless channel and the wireless transceiver 263 (receiver) receives a first signal S1 over the first wireless channel (from Alice), as depicted in Fig. 6B. Hence, the frequency bands in which the known bit sequence is transmitted and received by Alice and Bob are switched compared to the frequency bands Alice and Bob used in the transmission and reception in step 1.

- As before, since the signal S2 received by Alice and the signal S1 received by Bob carry knowledge on the wireless channel over which the known bits have been transmitted, Alice and Bob may estimate their respective channel response. The processing circuitry 252 may estimate a second channel response $\tilde{h}_2$ based on the public key and the second signal. In the example, Alice determines a channel estimate $h_2$ from received signal S3, whereas Bob determines a channel estimate $\tilde{h}_1$ from received signal S1, as illustrated in Fig. 6B.

For example, the second channel response $\tilde{h}_2$ may be estimated in frequency domain as $\tilde{H}_2$ based on the relation:

$$\widetilde{H}_2 = \frac{Y_2 X^T}{||X||^2}$$

with $Y_2$ referring to the second signal. Hence, after reception of the known bits that the apparatus (transmitting-receiving device 250) and the communication device (transmitting-receiving device 260) transmits twice over the first and second frequency bands, Alice and Bob have knowledge on the channel characteristics $h_1$ and $h_2$ via their channel estimates $\tilde{h}_1$ and $\tilde{h}_2$. Since the known bits are transmitted twice over different channels, an illegitimate user cannot - at least -- directly gain knowledge on $h_1$ and $h_2$, because none of Alice and Bob send their respective reception first and second signals, S1 and S2, back to each other. In other words, there is no reverse channel training phase.

Step 3 as illustrated in Fig. 6C:

- Estimates of the wireless channel in the frequency bands 1 and 2 are now available to Alice and Bob. The processing circuitry 252 may determine the secret key based on the first channel response and the second channel response. For example, the secret key may be determined by convolution of the first channel response and the second channel response, as illustrated in Fig. 6C. Alice and Bob convolve $h_1$ and $h_2$, with said convolution $h_1 * h_2$ being their private key and is the same for Alice and Bob. As a result, Alice and Bob share the private key.

The secret key may be used for authenticating, encrypting and/or decrypting communication with the communication device. The authenticating, encrypting and/or decrypting communication may be performed by the processing circuitry 252 of the transmitting-receiving device 250 in Fig. 2a.

According to the present disclosure, the apparatus generating the secret key may be the transmitting-receiving device 250 in Fig. 2a that interacts with the communication device in that the apparatus receives twice the known bits, but in different wireless channels as discussed above. In turn, the apparatus transmits twice the known bits to said communication device.

Hence, the communication device may have the same functionalities as the apparatus for the purposes of realizing the generation of a channel-based secret key that is shared between the apparatus and the communication device. Accordingly, the communication device may have a same or similar exemplary implementation as the transmitting-receiving device 2a. Such exemplary implementation of the communication device is shown in Fig. 2b. Hence, in this example, the transmitting-receiving device 260 represents Bob that transmits the known bits (public key) to the transmitting-receiving device 250 representing Alice. Further, the transmitting-receiving device 260 receives twice the known bits from the transmitting-receiving device 250 (Alice). Note that an illegitimate user (attacker) may be represented by one of the transmitting-receiving devices 250 or 260 performing functions of eavesdropping the wireless channel between Alice and Bob. In some exemplary embodiments, the transmitting-receiving device 260 comprises memory 261, processing circuitry 262, and a wireless transceiver 263 (or a wireless receiver 263), which may be capable of communicating with each other via a bus 265. The transmitting-receiving device 260 may further include a user interface 265. However, for some applications, the user interface 265 is not necessary (for instance some devices for machine-to-machine communications or the like).

The memory 261 may store a plurality of firmware or software modules, which implement some embodiments of the present disclosure. The memory may 261 be read from by the processing circuitry 262. Thereby, the processing circuitry may be configured to carry out the firmware/software implementing the embodiments. The processing circuitry 262 may include one or more processors, which, in operation, determines data.

In some embodiments, the processing circuitry 262 performing the functions described herein may be integrated within an integrated circuit on a single chip. The processing circuitry may also implement a control function to control the transceiver 263 to receive the signal. The transceiver 263 is configured (e.g. by the processing circuitry) to receive a signal and obtain symbols carried therein. For example, the processing circuitry 262 may configure (control) the transceiver 263, over the bus 265, to receive the signal. The transceiver may be, for example, a wireless transceiver obeying some standard or some pre-defined rules in order to comply with the transmitter, e.g. the one described with reference to Fig. 2a.

The transceiver/receiver 263 is configured to receive the public key from the apparatus such as the transmitting-receiving device 250 of Fig. 2a. The processing circuitry 262 may include one or more processors, which is/are configured to determine the data from symbols carried by the signal. Thereby, it is assumed that sequential portions of the data are mapped onto respective modulation symbols according to a target modulation. The processing circuitry 262 may include one or more processors, which is/are configured to estimate, based on the received first and second signals carrying the public key, the first and second channel response based on the public key, respectively, and determine the secret key based on the first and second channel response. Moreover, the processing circuitry 262 may use the secret key for authenticating, encrypting and/or decrypting communication with the transmitting-receiving device 250 (apparatus).

In general, at the receiver, before the above-mentioned processing, the signal may be received over a single antenna of the receiver or multiple antennas, amplified, and transformed into a specific domain (e.g. frequency and/or angle domains) by a transformation, such as FFT or DFT (Discrete Fourier Transformation), corresponding to the respective inverse transformation which has been applied at the encoder.

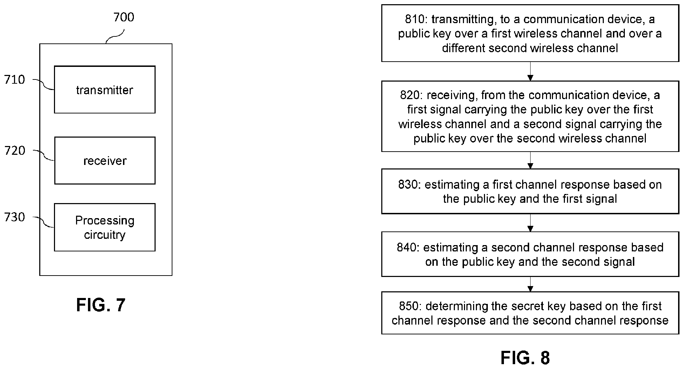

Fig. 7 shows another exemplary implementation of apparatus 700 for secret key generation, comprising a transmitter 710, a receiver 720, and processing circuitry 730. The transmitter and the receiver may be combined in a single transceiver module or transceiver unit (referred to as transceiver) such as the wireless transceiver 253 and/or wireless transceiver 263 in Figs. 2a and 2b, respectively. The transmitter is ocnfigured to transmit to a communication device a public key over a first wireless chanel and over a second wireless channel. The receiver is configured to receive from the communicaton device a first signal over the first wireless channel and a second signal over the second wireless channel. Both the first and second signals carry the public key. The processing circuitry 730 may be the processing circuitry 252 and/or the processing circuitry 262, being configured to estimate a first channel response based on the public key and the first signal and to estimate a secodn channel response based on the public key and the second signal. Moreover, the processing circuitry 730 is configured to determiend the secrete key based on the first channel response and the second chanel response.

The above described processing executed by the apparatus such as the transmitting-receiving device 250 of Fig. 2b (and the transmitting-receiving device 260 of Fig. 2b) and of the apparatus 300 in Fig. 7 have their corresponding procedural steps to generate a secret key. Fig. 8 shows the procedure to generate a secret key according to the present disclosure, where a public key is transmitted to a communication device over a first wireless channel and over a second wireless channel. The second wireless channel is different from the first wireless channel (step 810). In step 820, a first signal is received over the first wireless channel and a second signal is received over the second wireless channel. The first and second signals carry the public key, respectively. Based on the public key and the first signal, a first channel response is estimated in step 830. In step 840, a second channel response is estimated based on the public key and the second signal. Finally, based on the first channel response and the second channel response, the secret key is estimated (step 850).

The above-mentioned steps may be performed by the transmitting-receiving device 250 and/or the transmitting-receiving device 260 in figs. 2a and 2b. In particular, a computer program may be stored on a non-transitory and computer readable medium, such as the memory 251 and/or memory 261. The computer program includes instructions executed on one or more processors of the transmitting-receiving device 250 and/or the transmitting-receiving device 260. For example, the one or more processors may be the processing circuitry 252 and/or processing circuitry 262. Alternatively, the one or more processors may be included in the processing circuitries 252 and/or 262 and the wireless receivers 253 and 263, respectively. When the instructions are executed by the one or more processors, any of the above-mentioned steps may be performed to generate the secret key.

The above approach to generate a channel-based shared secret key may be applicable to any types of modulation and waveforms. For example, modulation types may be any of binary phase shift keying (BPSK), phase shift keying (PSK), M-level quadrature amplitude modulation (M-QAM), pulse modulation (PM) including modulation of amplitude (PAM), phase (PAM), frequency (PFM) and/or duration (PDM) such as the width (PWM), amplitude modulation (AM), frequency modulation (FM) or the like. The types of modulation may be combined with different kind of waveforms, such as time-division multiplexing (TDM), frequency division multiplexing, time-frequency-division (TFDD), and/or non-orthogonal or orthogonal frequency division multiplexing (OFDM), orthogonal time frequency space (OTFS), single carrier or the like.

The approach to generate a channel-based shared secret key of the present disclosure may eliminate above-mentioned security attack in that an illegitimate user has nor or no immediate access to the channel characteristics and hence to the private key. As a result, the authentication, encryption and/or decryption communication between Alice and Bob (i.e. between communication devices) becomes more secure and reliable. Moreover, with increased communication security, a reliable throughput of data may be provided.

The described implementations may be implemented in any device, system or network that is configured to transmit and/or receive radio frequency (RF) signals according to any of the wireless communication standards, including any of the IEEE 802.11 standards, the Bluetooth standard, code division multiple access (CDMA), wideband CDMA (W-CDMA), frequency division multiple access (FDMA), time division multiple access (TDMA), Terrestrial Trunked Radio (TETRA), Global System for Mobile communications (GSM), General Packet Radio Service (GPRS), Enhanced Data GSM Environment (EDGE), Evolution Data Optimized (EV-DO), 1xEV-DO, EV-DO Rev A, EV-DO Rev B, High Speed Packet Access (HSPA), High Speed Downlink Packet Access (HSDPA), High Speed Uplink Packet Access (HSUPA), Evolved High Speed Packet Access (HSPA+), Long Term Evolution (LTE), or other known signals that are used to communicate within a wireless, cellular or internet of things (IoT) network, such as a system utilizing 3G, 4G, or 5G, or further implementations thereof, technology.

In summary, the present disclosure provides for techniques and methods are described to generate a shared secret key using channel characteristics between a transmitting device and a receiving device. A public key is transmitted to a communication device over a first wireless channel and a second wireless channel that is different from the first wireless channel. From the communication device, a first signal and a second signal both carrying the public key are received over the first wireless channel and the second wireless channel, respectively. Based on the first signal and the public key, a first channel response is calculated and, based on the second signal and the public key, a second channel response is calculated. The secret key is determined based on the first and second channel response. In this way, the generation of a channel-based shared secret key becomes more secure and robust against eavesdropping of illegitimate users, allowing for secure communication.

*Implementations in software and hardware*

It is noted that although embodiments and examples of the present disclosure were provided in terms of an apparatus above, the corresponding method provides the functionality described by the apparatus are also provided. Moreover, it is noted that any of the steps described above may be included as code instructions in a program, which may be executed by one or more processors.

The methodologies described herein may be implemented by various means depending upon the application. For example, these methodologies may be implemented in hardware, operation system, firmware, software, or any combination of two or all of them. For a hardware implementation, any processing circuitry may be used, which may include one or more processors. For example, the hardware may include one or more of application specific integrated circuits (ASICs), digital signal processors (DSPs), digital signal processing devices (DSPDs), programmable logic devices (PLDs), field programmable gate arrays (FPGAs), processors, controllers, any electronic devices, or other electronic circuitry units or elements designed to perform the functions described above.

If implemented as program code, the functions performed by the transmitting-receiving device 250, the transmitting-receiving device 260, and the apparatus 700 may be stored as one or more instructions or code on a non-transitory computer readable storage medium. The computer-readable media includes physical computer storage media, which may be any available medium that can be accessed by the computer, or, in general by the processing circuitry 730. Such computer-readable media may comprise RAM, ROM, EEPROM, optical disk storage, magnetic disk storage, semiconductor storage, or other storage devices. Some particular and non-limiting examples include compact disc (CD), CD-ROM, laser disc, optical disc, digital versatile disc (DVD), Blu-ray (BD) disc or the like. Combinations of different storage media are also possible - in other words, distributed and heterogeneous storage may be employed.

For example, the program code may cause the processing circuitries 252, 262, 730 (e.g. including one or more processors) to operate as a special purpose computer programmed to perform the techniques disclosed herein. The processing circuitry 730 may be the processing circuitry 252 and/or the processing circuitry 262.

The embodiments and exemplary implementations mentioned above show some non-limiting examples. It is understood that various modifications may be made without departing from the claimed subject matter. For example, modifications may be made to adapt the examples to new systems and scenarios without departing from the central concept described herein. In particular, the above embodiments and exemplary implementations are multiple-input multiple-output (MIMO) compatible and can be applied to all MCSs.

*Selected embodiments and examples*

According to an aspect, an apparatus for secret key generation is provided, the apparatus comprising: a transmitter configured to transmit, to a communication device, a public key over a first wireless channel and over a second wireless channel different from the first wireless channel: a receiver configured to receive from the communication device: a first signal carrying the public key over the first wireless channel; and a second signal carrying the public key over the second wireless channel; and processing circuitry configured to: estimate a first channel response based on the public key and the first signal and a second channel response based on the public key and the second signal; determine the secret key based on the first channel response and the second channel response.

In an exemplary implementation, in a first step, the transmitter transmits the public key over the second wireless channel and the receiver receives the first signal over the first wireless channel, and in a second step following the first step, the transmitter transmits the public key over the first wireless channel and the receiver receives the second signal over the second wireless channel.

For example, the secret key is determined by convolution of the first channel response and the second channel response.

According to an exemplary implementation, the first channel response $\tilde{H}_1$ and the second channel response $\tilde{H}_2$ is based on the following relations:

$$\widetilde{H}_1 = \frac{Y_1 X^T}{||X||^2} \text{ and } \widetilde{H}_2 = \frac{Y_2 X^T}{||X||^2}$$

wherein $Y_1$ refers to the first signal and $Y_2$ refers to the second signal, $X$ refers to the public key, and $|| \ ||^2$ refers to square norm operation.

For example, the first wireless channel and the second wireless channel refer to different frequency bands.

Moreover, the processing circuitry is configured to generate a predefined bit sequence as the public key.

In a further exemplary implementation, the processing circuitry is configured to use the secret key for authenticating, encrypting and/or decrypting communication with the communication device.

According to an aspect, a method for secret key generation is provided comprising steps of: transmitting, to a communication device, a public key over a first wireless channel and over a second wireless channel different from the first wireless channel; receiving from the communication device: a first signal carrying the public key over the first wireless channel; and a second signal carrying the public key over the second wireless channel; estimating a first channel response based on the public key and the first signal; estimating a second channel response based on the public key and the second signal; and determining the secret key based on the first channel response and the second channel response.

The examples and exemplary implementations described above for the apparatus apply in the same manner to the method for physical layer authentication. In particular, the processing circuitry may be further configured to perform the steps of one or more of the above-described embodiments, examples, and exemplary implementations.

Still further, a computer program is provided, stored on a non-transitory and computer-readable medium, wherein the computer program includes instructions which when executed on one or more processors perform any of the steps of the method.

The channel-based secret key generation of the present disclosure discussed above enables a more secure processing, such as authentication, encryption and/or decryption by employing the secret key and closes the security gap in that an illegitimate user may not have direct access to the channel characteristics at different frequency bands. The advantageous effect may be enabled in that legitimate users, such as Alice and Bob, do not perform reverse transmission of their received signals (obtained in a forward transmission) that already carry information on the channel characteristics in different frequency bands. Instead, the legitimate users perform a forward transmission twice of known bits transmitted in different frequency bands to each other. Hence, the eavesdropping of the wireless channel between legitimate users by an illegitimate user is prevented in that the illegitimate user cannot directly access the channel response between the legitimate users. As a result, the communication between legitimate user becomes more sure, enabling a reliable throughput of data using a secure wireless channel.

According to some embodiments, the processing circuitry and/or the transceiver is embedded in an integrated circuit, IC.

Although the disclosed subject matter has been described in detail for the purpose of illustration based on what is currently considered to be the most practical and preferred embodiments, it is to be understood that such detail is solely for that purpose and that the disclosed subject matter is not limited to the disclosed embodiments, but, on the contrary, is intended to cover modifications and equivalent arrangements that are within the spirit and scope of the appended claims. For example, it is to be understood that the presently disclosed subject matter contemplates that, to the extent possible, one or more features of any embodiment can be combined with one or more features of any other embodiment.

**Claims**

1. An apparatus for secret key generation, the apparatus comprising:
   a transmitter configured to transmit, to a communication device, a public key over a first wireless channel and over a second wireless channel different from the first wireless channel:
   a receiver configured to receive from the communication device:

   - a first signal carrying the public key over the first wireless channel; and
   - a second signal carrying the public key over the second wireless channel; and processing circuitry configured to:
   - estimate a first channel response based on the public key and the first signal and a second channel response based on the public key and the second signal;
   - determine the secret key based on the first channel response and the second channel response.

2. The apparatus according to claim 1, wherein

   in a first step, the transmitter transmits the public key over the second wireless channel and the receiver receives the first signal over the first wireless channel, and
   in a second step following the first step, the transmitter transmits the public key over the first wireless channel and the receiver receives the second signal over the second wireless channel.

3. The apparatus according to claim 1 or 2, wherein the secret key is determined by convolution of the first channel response and the second channel response.

4. The apparatus according to any of claims 1 to 3, wherein the first channel response $\tilde{H}_1$ and the second channel response $\tilde{H}_2$ is based on the following relations:

$$\widetilde{H}_1 = \frac{Y_1 X^T}{||X||^2} \text{ and } \widetilde{H}_2 = \frac{Y_2 X^T}{||X||^2}$$

wherein $Y_1$ refers to the first signal, $Y_2$ refers to the second signal $X$ refers to the public key, and $|| \, ||^2$ refers to square norm operation.

5. The apparatus according to any of claims 1 to 4, wherein the first wireless channel and the second wireless channel refer to different frequency bands.

6. The apparatus according to any of claims 1 to 5, wherein the processing circuitry is configured to generate a predefined bit sequence as the public key.

7. The apparatus according to any of claims 1 to 6, wherein the processing circuitry is configured to use the secret key for authenticating, encrypting and/or decrypting communication with the communication device.

8. A method for secret key generation comprising steps of:

   transmitting, to a communication device, a public key over a first wireless channel and over a second wireless channel different from the first wireless channel;
   receiving from the communication device:

   - a first signal carrying the public key over the first wireless channel; and
   - a second signal carrying the public key over the second wireless channel;

   estimating a first channel response based on the public key and the first signal;
   estimating a second channel response based on the public key and the second signal; and
   determining the secret key based on the first channel response and the second channel response.

9. The method according to claim 8, wherein

   in a first step, the public key is transmitted over the second wireless channel and the first signal is received over the first wireless channel, and
   in a second step following the first step, the public key is transmitted over the first wireless channel and the second signal is received over the second wireless channel.

10. The method according to claim 8 or 9, wherein the secret key is determined by convolution of the first channel response and the second channel response.

11. The method according to any of claims 8 to 10, wherein the first channel response $\tilde{H}_1$ and the second channel response $\tilde{H}_2$ is based on the following relations:

$$\widetilde{H}_1 = \frac{Y_1 X^T}{||X||^2} \text{ and } \widetilde{H}_2 = \frac{Y_2 X^T}{||X||^2}$$

   wherein $Y_1$ refers to the first signal, $Y_2$ refers to the second signal, $X$ refers to the public key, and $|| \; ||^2$ refers to square norm operation.

12. The method according to any of claims 8 to 11, wherein the first wireless channel and the second wireless channel refer to different frequency bands.

13. The method according to any of claims 8 to 12, wherein a predefined bit sequence is generated as the public key.

14. The method according to any of claims 8 to 13, wherein the secret key is used for authenticating, encrypting and/or decrypting communication with the communication device.

15. A computer program stored on a non-transitory and computer readable medium, wherein the computer program includes instructions which when executed on one or more processors perform the method according to any of claims 8 to 14.

Communication System CS

FIG. 1

FIG. 2a

FIG. 2b

forward($h_1$)

A ⟶ B

reverse ($h_2$)

## FIG. 3

| | $T$ | |
|---|---|---|
| $f_2$ | 1) Bob transmits $X$. | 2) Bob transmits $Y_B'$. |
| $f_1$ | 1) Alice transmits $X$. | 2) Alice transmits $Y_A'$. |
| | $T_F$ | $T_R$ |

## FIG. 4

Alice

Bob

Known bit $h_1$ Known bit

S1 $h_2$ $h_1$ S2 $h_3$ Eve

S3 $h_2$ $h_1$ S4 $h_4$

Secret Key Estimate $h_2 * h_1$ Estimate $h_1 * h_2$ Secret Key

## FIG. 5

**FIG. 6A**

**FIG. 6B**

**FIG. 6C**

700

710 — transmitter

720 — receiver

730 — Processing circuitry

**FIG. 7**

810: transmitting, to a communication device, a public key over a first wireless channel and over a different second wireless channel

820: receiving, from the communication device, a first signal carrying the public key over the first wireless channel and a second signal carrying the public key over the second wireless channel

830: estimating a first channel response based on the public key and the first signal

840: estimating a second channel response based on the public key and the second signal

850: determining the secret key based on the first channel response and the second channel response

**FIG. 8**

Europäisches Patentamt

European Patent Office

Office européen des brevets

# EUROPEAN SEARCH REPORT

**Application Number**

EP 24 15 3190

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/422027 A1 (ELSHAFIE AHMED [US] ET AL) 28 December 2023 (2023-12-28) * paragraphs [0023], [0044], [0005], [0025]; figures 2,3,6 * | 1-15 | INV. H04L9/32 H04L9/08 |
| X | YOUSSEF EL HAJJ SHEHADEH ET AL: "An Optimal Guard-Intervals Based Mechanism for Key Generation from Multipath Wireless Channels", NEW TECHNOLOGIES, MOBILITY AND SECURITY (NTMS), 2011 4TH IFIP INTERNATIONAL CONFERENCE ON, IEEE, 7 February 2011 (2011-02-07), pages 1-5, XP031982192, DOI: 10.1109/NTMS.2011.5720584 ISBN: 978-1-4244-8705-9 * sections I, II * | 1-15 | |
| A | US 2022/150063 A2 (RAMABADRAN PRASIDH [IE] ET AL) 12 May 2022 (2022-05-12) * paragraph [0032] * | 1-15 | |

**TECHNICAL FIELDS SEARCHED (IPC)**

H04L
H04W

The present search report has been drawn up for all claims

| Place of search | Date of completion of the search | Examiner |
|---|---|---|
| Munich | 1 July 2024 | Yamajako-Anzala, A |

## ANNEX TO THE EUROPEAN SEARCH REPORT
## ON EUROPEAN PATENT APPLICATION NO.

EP 24 15 3190

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2024

| Patent document cited in search report | Publication date | Patent family member(s) | | Publication date |
|---|---|---|---|---|
| US 2023422027 A1 | 28-12-2023 | US | 2023422027 A1 | 28-12-2023 |
| | | WO | 2024006599 A1 | 04-01-2024 |
| US 2022150063 A2 | 12-05-2022 | US | 2021377014 A1 | 02-12-2021 |
| | | WO | 2020079284 A1 | 23-04-2020 |

EPO FORM P0459

For more details about this annex : see Official Journal of the European Patent Office, No. 12/82